# EUROPÄISCHE PATENTANMELDUNG

(11) **EP 1 519 468 A2**
(43) Veröffentlichungstag der Anmeldung: **30.03.2005**
(21) Anmeldenummer: 04016919.5
(22) Anmeldetag: 17.07.2004
(51) Int. Cl.: H02K 1/20

(54) **Fluidgekühlte elektrische Maschine und Verfahren zur Herstellung einer solchen**

(30) Priorität: 25.09.2003 DE 10344630
(71) Anmelder: ROBERT BOSCH GMBH, 70442 Stuttgart (DE)
(72) Erfinder: Wessels, Siegbert, 31141 Hildesheim (DE); Glauning, Jürgen, 71711 Steinheim (DE)

(57) **Zusammenfassung**

Die Erfindung betrifft eine fluidgekühlte elektrische Maschine mit einem Rotor und einem Stator (10), der zumindest an einem Außenumfang wenigstens einen Kühlkanal (40) für zirkulierendes Kühlfluid aufweist. Es ist vorgesehen, dass der wenigstens eine Kühlkanal (40) formschlüssig und kraftschlüssig mit einer Außenmantelfläche (54) des Stators (10) verbunden ist.

Die Erfindung betrifft weiterhin ein Verfahren zur Herstellung einer fluidgekühlten elektrischen Maschine mit einem Rotor und einem Stator (10), bei dem auf einen Außenumfang eines aus einzelnen, miteinander verbundenen Statorblechen bestehendes Statorpakets ein Kühlkanal (40) für zirkulierendes Kühlfluid montiert wird. Hierbei ist vorgesehen, dass der wenigstens eine Kühlkanal (40) formschlüssig und kraftschlüssig mit einer Außenmantelfläche (54) des Stators (10) verbunden wird.

## Beschreibung

Die Erfindung betrifft eine fluidgekühlte elektrische Maschine gemäß Oberbegriff des Patentanspruchs 1. Die Erfindung betrifft ferner ein Verfahren zur Herstellung einer fluidgekühlten elektrischen Maschine gemäß Oberbegriff des Patentanspruchs 12.

### Stand der Technik

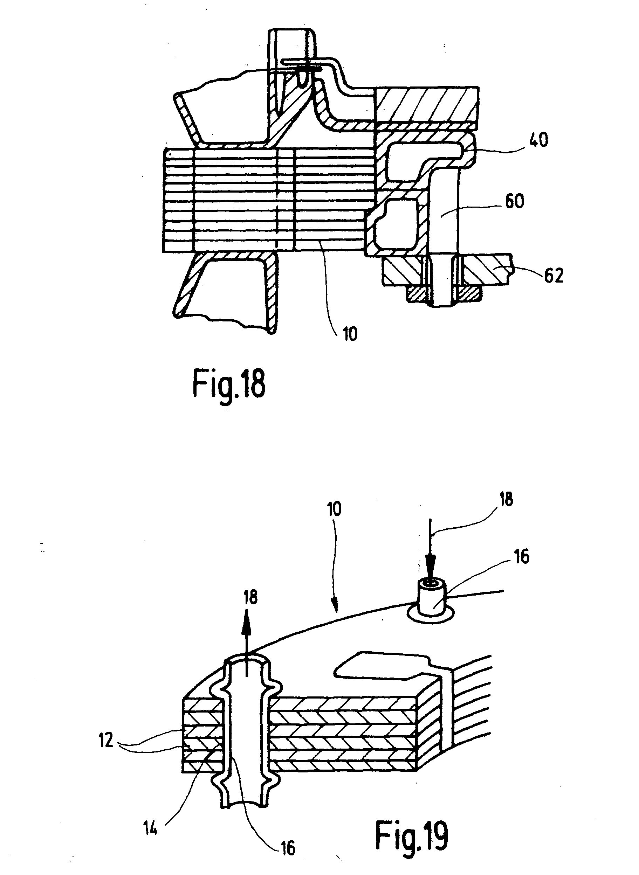

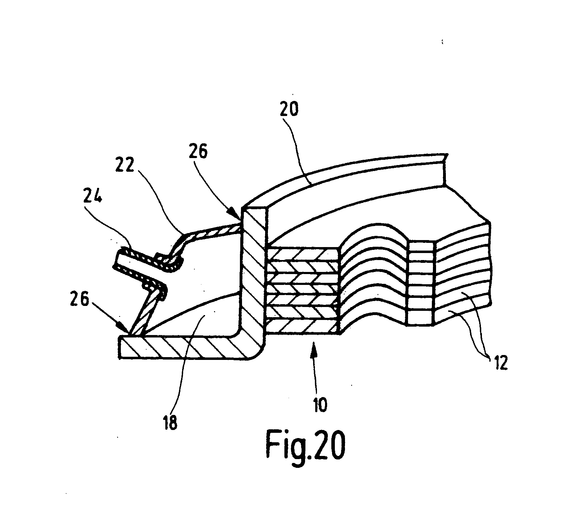

Fluidgekühlte elektrische Maschinen sind in unterschiedlichen Ausführungsformen bekannt. Als Kühlmedium eignet sich beispielsweise Öl oder ein Gas mit guten Wärmeübertragungseigenschaften. Auch andere Flüssigkeiten als Öl werden als Kühlmedium verwendet. Zur Fluidkühlung eines Statorpakets einer elektrischen Maschine lassen sich zwei unterschiedliche Bauarten unterscheiden, bei der die Kühlung in ein Gehäuse oder in den Stator der elektrischen Maschine integriert sein kann. Die Figuren 19 und 20 zeigen zwei verschiedene Möglichkeiten zur Fluidkühlung einer elektrischen Maschine gemäß bekanntem Stand der Technik.

Bei der Integration von Kühlkanälen in das Lamellenpaket eines Stators 10 gemäß Figur 19 werden Bohrungen 14, die beim Herstellen der Nuten des Stators 10 mitgestanzt werden, so ausgelegt, dass sie von einem geeigneten Kühlmedium 18 durchströmt werden können. Je nach verwendetem Kühlmedium 18 sind unterschiedliche Abdichtungsmaßnahmen erforderlich. Für den Einsatz einer Flüssigkeitskühlung ist die Verwendung von Kupferrohren 16, bekannt, die in die Bohrungen 14 in den Statorlamellen 12 des Stators 10 eingefügt und dort befestig werden. Die Kupferrohre 16 werden in die Bohrungen 14 eingefügt und zur Sicherstellung eines guten Wärmeübergangs aufgeweitet. Durch diese Rohre 16 wird das Kühlmedium 18 geführt und ein Einsickern in das Blechpaket des Stators 10 vermieden. Stirnseitig des Stators 10 sind üblicherweise Deckel (nicht dargestellt) vorgesehen, welche die Verbindung der Rohre 16 miteinander und mit der Kühlmittelversorgung herstellen.

Ein zweites bekanntes Grundprinzip ist anhand der Figur 20 verdeutlicht. Hierbei ist die Kühlung in ein Gehäuse 20 der elektrischen Maschine integriert. Bekannte Ausführungen sehen beispielsweise ein zweiteiliges Gehäuse 20 vor. Die jeweiligen Innen- und Außengeometrien der Gehäusehälften bilden nach der Montage die erforderlichen Hohlräume für zirkulierendes Kühlmedium 18. Gegebenenfalls werden die Gehäusehälften miteinander verschweißt. Der Innendurchmesser solcher Gehäuse 20 wird bearbeitet und das Statorpaket 10 eingepresst. Dabei können jedoch Asymmetrien der Gehäuse 20 zu ungleichförmigen Innendurchmessern des eingepressten Status 10 führen.

Insbesondere bei Gehäusen 20 aus Aluminium ist mit größer werdendem Durchmesser des Stators 10 die Auslegung einer reibschlüssigen Verbindung zwischen Stator 10 und Gehäuse 20 für einen großen Temperaturbereich als kritisch zu bewerten. Wichtig sind zudem die zuverlässig verschlossenen Dichtfugen 26 zwischen Außenseite des Gehäuses 20 und dem dort angebrachten Deckel 22, der bspw. verschweißt sein kann. Stutzen 24 zum Anschluss von Leitungsverbindungen zur Zufuhr des Kühlmediums 18 sind meist einstückig mit dem Deckel 22 ausgebildet.

Weiterhin sind Fertigungskonzepte bekannt, bei denen ein außen am Statorpaket angeordneter, ringförmiger Kühlkanal aus zwei Kanalhälften gebildet wird, die in axialer Richtung zusammengefügt und beispielsweise miteinander verschweißt oder anderweitig verbunden werden. Probleme können hier insbesondere hinsichtlich der Dichtheit des Kühlkanals, dessen Formhaltigkeit sowie hinsichtlich eines gegebenenfalls zwischen Außenmantelfläche des Stators und Innenseite des Kühlkanals gebildeten Luftspalts bestehen.

### Vorteile der Erfindung

Bei einer erfindungsgemäßen fluidgekühlten elektrischen Maschine mit einem Rotor und einem Stator, der zumindest an einem Außenumfang wenigstens einen Kühlkanal für zirkulierendes Kühlfluid aufweist, ist der wenigstens eine Kühlkanal formschlüssig und kraftschlüssig mit einer Außenmantelfläche des Stators verbunden. Der Stator kann insbesondere eine weitgehend zylindrische Außenmantelfläche aufweisen. Die Außenmantelfläche des Stators kann jedoch auch eine oder mehrere Stufen und Abschnitte unterschiedlichen Außendurchmessers aufweisen. Eine weitere Ausgestaltung kann vorsehen, dass an der Außenmantelfläche des Stators mehrere Axialnuten vorgesehen sind, in die jeweils der Kühlkanal mit seiner Innenmantelfläche form- und/oder kraftschlüssig eingreift.

Durch die form- und kraftschlüssige Verbindung des Kühlkanals mit dem Stator der elektrischen Maschine ist einerseits eine stabile Verbindung gegeben, bei der kein Luftspalt zwischen Stator und Kühlkanal die Wärmeübertragung an das kühlende Fluid beeinträchtigen könnte. Die Wärmeübertragung zwischen Stator und Kühlkanal mit dem darin zirkulierenden Kühlmedium ist durch dessen form- und kraftschlüssige Verbindung mit der Außenmantelfläche des Stators besonders günstig. Als Kühlmedium kommen verschiedene Flüssigkeiten oder Gase in Frage. Bei einem Kühlkanal aus inertem Material eignet sich beispielsweise auch herkömmliches Wasser als Kühlmedium. Allerdings kann Öl oftmals die in der elektrischen Maschine entstehende Wärme besser abführen, da es eine bessere Wärmespeicherkapazität aufweist.

Der Stator ist üblicherweise als Statorpaket ausgebildet, das aus einer Vielzahl von geschichteten und/oder miteinander verbundenen Statorblechen besteht. Aufgrund des an der Außenseiten des Stators angeordneten Kühlkanals sind keine besonderen Maßnahmen zur Durchleitung von Kühlkanälen innerhalb des Statorpakets notwendig, was deren Fertigung und Verarbeitung aufwendiger und teurer machen würde.

Der Kühlkanal kann gemäß einer Ausgestaltung der Erfindung als ein spiralig gewickeltes Rohr mit einer oder mehreren Windungen ausgebildet sein. Der Kühlkanal kann auch eine insgesamt torusförmige Kontur aufweisen. Vorzugsweise erfolgt die form- und kraftschlüssige Verbindung des Kühlkanals mit dem Statorpaket mittels eines Innenhochdruckumformverfahrens, bei dem der auf das Statorpaket aufgeschobene Kühlkanal durch Druckbeaufschlagung in form- und kraftschlüssige Verbindung mit dem Statorpakte gebracht wird. Auf diese Weise können alle spanabhebenden Bearbeitungen des Gehäuses und des Statorpakets vermieden werden. Als Kühlkanäle eignen sich Stahlrohre oder dergleichen, bei denen die Wärmedehnung des Kühlrohres im Bereich der Dehnung des Stators liegt, so dass im Betrieb der elektrischen Maschine ein schädlicher Einfluss auf den Wärmeübergang und somit ggf. den Festsitz der gesamten Anordnung vermieden wird.

Durch die Verwendung des erfindungsgemäßen Kühlkanals werden die bei geteilten Gehäusehälften auftretenden Dichtflächen vollständig vermieden. Die Innenhochdruckumformung ermöglicht einen Formschluss in axialer wie auch in radialer Richtung. Ein Übergang vom Kühlrohr in Anschlussstutzen ist einfach möglich, da die Anschlussstutzen einstückig mit dem Kühlkanal ausgebildet werden können.

Weiterhin können am Kühlkanal geeignete Befestigungselemente zur Montage des Stators bzw. des Kühlkanals innerhalb eines Gehäuses vorgesehen sein. Die Befestigungselemente können beispielsweise als Anschlussbleche, Haken, Bolzen oder dergleichen ausgebildet sein. An den Bolzen kann ggf. ein Gewinde angebracht sein, so dass eine einfache Montage ermöglicht ist. Diese Befestigungselemente können insbesondere mit einer Außenseite des Kühlkanals verschweißt sein.

Ein erfindungsgemäßes Verfahren zur Herstellung einer fluidgekühlten elektrischen Maschine mit einem Rotor und einem Stator, bei dem auf einen Außenumfang eines aus einzelnen miteinander verbundenen Statorblechen bestehendes Statorpaket ein Kühlkanal für zirkulierendes Kühlfluid montiert wird, sieht vor, dass der wenigstens eine Kühlkanal formschlüssig und kraftschlüssig mit einer Außenmantelfläche des Stators verbunden wird. Der Kühlkanal wird insbesondere mittels Innenhochdruckumformung form- und kraftschlüssig mit dem Stator verbunden. Eine Ausgestaltung der Erfindung sieht vor, dass das Statorpaket und der Kühlkanal während der Innenhochdruckumformung jeweils in einem Werkzeug eingespannt sind, welches den Umformraum zu allen Seiten hin begrenzt.

Insbesondere kann in eine Innenmantelfläche des Statorpakets während der Innenhochdruckumformung ein Innenstempel eingefügt werden, welcher eine Durchmesserverringerung des Statorpakets verhindert. An eine Außenseite des Kühlkanals kann während der Innenhochdruckumformung zudem eine Matrize angelegt werden, welche eine Dehnung des Kühlkanals nach außen begrenzt. Weiterhin kann an der Innenseite des Statorpakets sowie des Kühlkanals während der Innenhochdruckumformung jeweils ein Oberstempel bzw. Unterstempel angelegt werden, welcher jeweils eine Dehnung des Kühlkanals in axialer Richtung begrenzt.

Die Vorteile der Innenhochdruckumformung zur form- und kraftschlüssigen Verbindung des Stators mit dem Kühlkanal liegen insbesondere in der Herstellung einer zuverlässigen und sehr festen mechanischen Verbindung, bei der zudem unter allen auftretenden Betriebsbedingungen ein guter Wärmeübergang auf den Kühlkanal und das darin zirkulierende Kühlfluid gegeben ist. Als Kühlkanal bietet sich insbesondere die Verwendung eines geeignet geformten Stahlrohrs bzw. eines Torus aus Stahl an, da dessen Wärmedehnungseigenschaften weitgehend mit denen des Stators übereinstimmen. Durch den Einsatz des erfindungsgemäßen Umformverfahrens mittels Hochdruckbeaufschlagung werden alle spanabhebenden Verfahrensschritte des Gehäuses, des Stators sowie des Kühlkanals vermieden, wie sie im Stand der Technik notwendig sind. Die Anschlussstutzen können bereits bei der Fertigung des Kühlkanals einstückig mit diesem ausgebildet werden, so dass hierbei keinerlei zusätzliche Fertigungs- und Dichtigkeitsprobleme entstehen können.

Weitere Merkmale und Vorteil der vorliegenden Erfindung ergeben sich aus den abhängigen Ansprüchen sowie der nachfolgenden Figurenbeschreibung.

### Zeichnungen

Die Erfindung wird nachfolgend in bevorzugten Ausführungsbeispielen anhand der zugehörigen Zeichnungen näher erläutert. Dabei zeigt:
- Figur 1: Einzelpole eines Stators, die zu einem Paket gestapelt werden,
- Figur 2: ein Wicklungsrahmen, der auf die Einzelpole aufgebracht wird,
- Figur 3: ein Einzelpol mit aufgebrachter Drahtwicklung und heraus geführten Leitungsenden,
- Figur 4: ein Jochringsegment, der zu einem Stator gestapelt und zusammen gefügt werden kann,
- Figur 5: eine erste Variante eines erfindungsgemäßen Kühlkanals,
- Figur 6: ein auf einen Stator aufgebrachten und in ein Umformwerkzeug eingelegten Kühlkanal in Teilschnittdarstellung,
- Figur 7: eine Teilschnittdarstellung eines mit dem Stator verbundenen Kühlkanals nach einer Innenhochdruckumformung,
- Figur 8: eine Variante eines Statorpakets mit Axialnuten am Außenumfang,
- Figuren 9: bis 12 verschiedene Ausführungsvarianten des erfindungsgemäßen Kühlkanals,
- Figuren 13: und 14 alternative Ausführungsvarianten des Statorpakets mit gestufter Außenmantelfläche,
- Figur 15: ein Kühlkanal mit daran angebrachtem Befestigungselement,
- Figuren 16: bis 18 aufeinander folgende Verfahrensschritte zur Montage der elektrischen Maschine,
- Figur 19: eine erste Variante eines Kühlkanals innerhalb eines Statorpakets einer elektrischen Maschine gemäß bekanntem Stand der Technik und
- Figur 20: eine zweite Variante eines Kühlkanals an einem Gehäuse einer elektrischen Maschine gemäß bekanntem Stand der Technik.

### Beschreibung der Ausführungsbeispiele

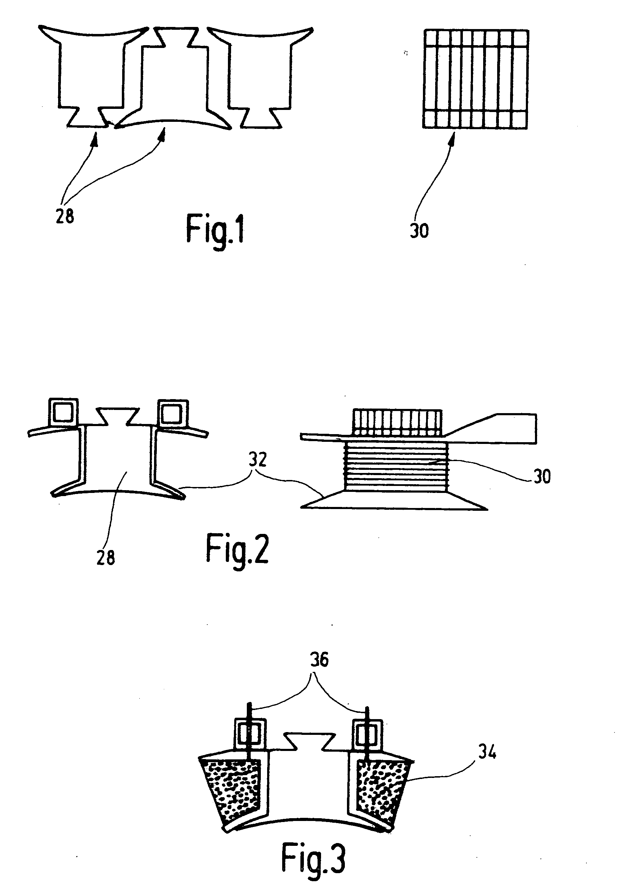

Anhand der Figuren 1 bis 18 wird im Folgenden ein erfindungsgemäßes Verfahren zur Herstellung einer fluidgekühlten elektrischen Maschine erläutert, wobei einzelne Bestandteile der elektrischen Maschine in verschiedenen Ausführungsbeispielen näher erläutert werden.

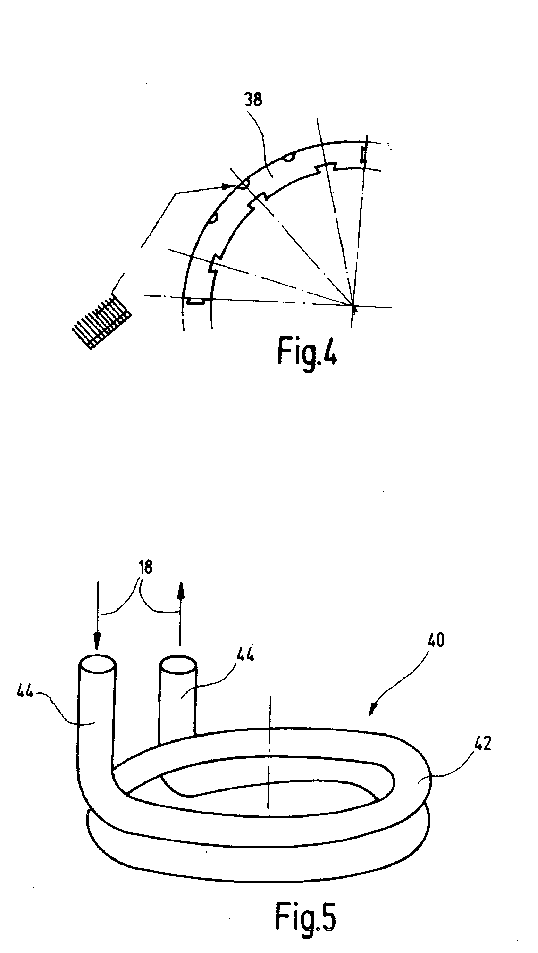

Die Figur 1 zeigt einzelne Pole eines Jochrings, die gestanzt und gestapelt werden. Die Einzelpole sind hierbei mit der Bezugsziffer 28 bezeichnet, während der Stapel mit der Bezugsziffer 30 bezeichnet ist. Die Einzelpole 28 werden anschließend isoliert (Figur 2) und mit einem Rahmen 32 zum Aufbringen einer Drahtwicklung (Figur 3) versehen. Einzelne Leitungsenden 36 der Wicklung 34 sind nach außen herausgeführt. Die gestapelten Einzelpole 28 können anschließend in einen geschlossenen oder segmentierten Jochring 38 eingefügt werden (Figur 4), wodurch der Stator fertiggestellt werden kann.

Figur 5 zeigt eine erste Ausführungsvariante eines erfindungsgemäßen Kühlkanals 40, der außen am Stator 10 angebracht werden kann. Der Kühlkanal 40 besteht im gezeigten Ausführungsbeispiel vorzugsweise aus einem runden Metallrohr, das in zwei Windungen gewickelt ist, so dass der Innendurchmesser des Kühlkanals 40 mit leichtem Spiel auf den Außenumfang des Stators 10 aufgeschoben werden kann. Der Kühlkanal 40 kann insbesondere aus einem Stahlrohr 42 bestehen, dessen Wärmeausdehnungskoeffizient ungefähr gleich ist wie der des Stators 10. Das zirkulierende Kühlmedium 18 kann über Anschlussstutzen 44 eingebracht und abgeführt werden, die vorzugsweise einstückig mit dem Stahlrohr 42 des Kühlkanals 40 ausgebildet und vorzugsweise durch rechtwinkeliges Abbiegen in radialer Richtung ausgebildet sind.

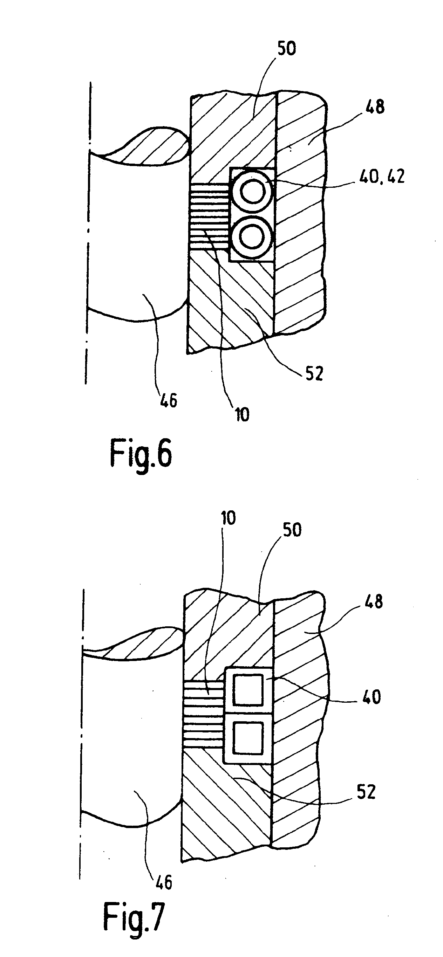

Die Figuren 6 und 7 zeigen in schematischen Teilschnittdarstellungen das erfindungsgemäße Verfahren zur Innenhochdruckumformung des Kühlkanals 40, der zuvor auf den Außenumfang des Statorpakets 10 aufgeschoben wurde (Figur 6). In den Innendurchmesser des Statorpakets 10 wird ein Innenstempel 46 eingeschoben, um eine Verformung des Statorpakets und insbesondere eine Durchmesserverringerung zu verhindern. Eine Matrize 48 begrenzt die Dehnung des Kühlkanals 40 nach außen, wenn in diesen ein hoher Druck von mehreren Tausend bar eingebracht wird.

Die Innenhochdruckumformung erfolgt üblicherweise mittels einer Flüssigkeit, die unter sehr hohem Druck in das Stahlrohr 42 des Kühlkanals eingebracht wird, wobei dieser gegen seine äußere Begrenzung aufgeweitet wird. Das Stahlrohr 42 des Kühlkanals 40 wird somit durch die hohen Innendruck plastisch verformt. Ein Oberstempel 50 sowie ein Unterstempel 52 begrenzen jeweils die Ausdehnung des Statorpakets sowie des Kühlkanals in axiale Richtungen nach oben und unten. Wie anhand der Figuren 6 und 7 verdeutlicht wird, wird das hohlzylindrische Stahlrohr 42 des Kühlkanals 40 zu einer vierkantigen Kontur aufgeweitet, wobei eine form- und kraftschlüssige Verbindung des Kühlkanals 40 mit dem Statorpaket 10 hergestellt wird. Bei geeigneter Prozessführung erfolgt dies Umformung rückfederungsfrei, so dass eine enge mechanische Verbindung entsteht, die einen guten Wärmeübergang gewährleistet.

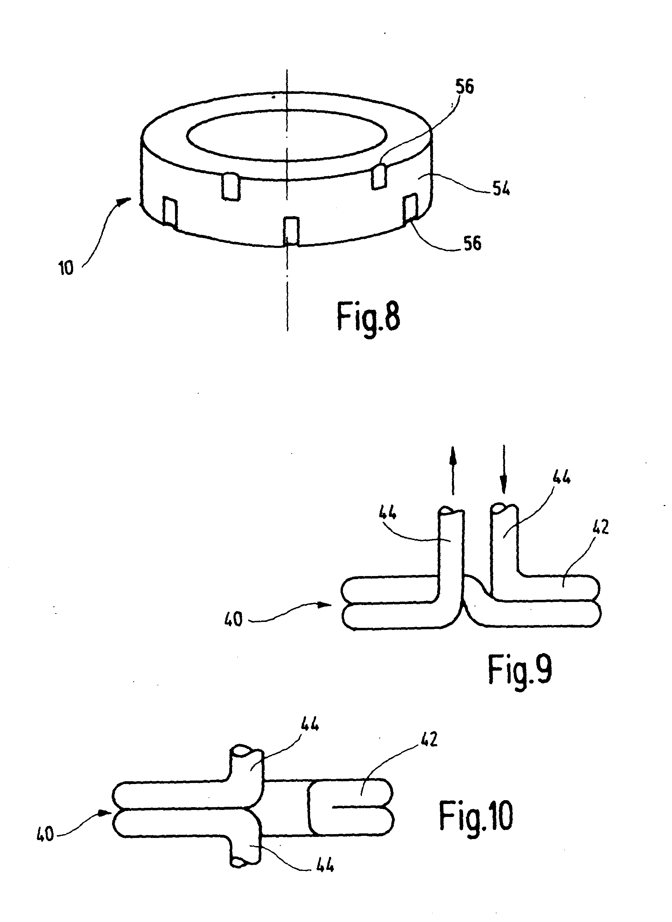

Die Figur 8 zeigt eine vorteilhafte Ausführungsvariante eines Stator-pakets 10, bei dem an dessen Außenmantelfläche 54 mehrere Axialnuten 56 eingebracht sind, welche die formschlüssige Verbindung zwischen Kühlkanal 40 und Statorpaket 10 verbessern, indem der Kühlkanal 40 bei dessen plastischer Aufweitung in die Axialnuten 56 hineingedruckt und für eine äußerst zuverlässige form- und kraftschlüssige Verbindung mit dem Statorpaket 10 sorgt.

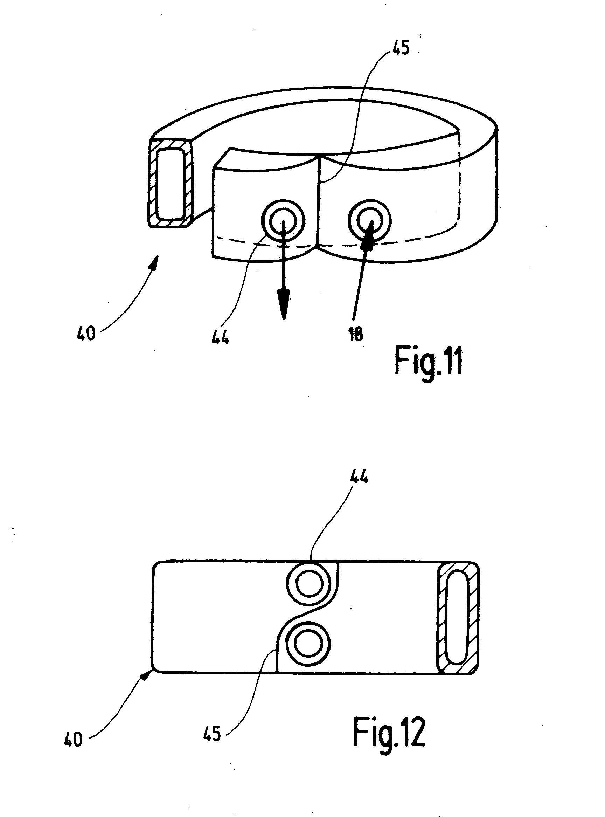

Verschiedene, mögliche Ausgestaltungen des Kühlkanals sind anhand der Figuren 9 bis 12 verdeutlicht. Dabei zeigen die Figuren 9 und 10 jeweils verschieden geformte Stahlrohre 42, bei denen die Anschlussstutzen 44 in paralleler Richtung (Figur 9) bzw. in zueinander entgegengesetzter Richtung (Figur 10) nach außen geführt sind. Der Kühlkanal 40 der Figur 10 weist eine offene, ringförmige Struktur auf, bei der eine zuverlässige Verbindung mit dem Stator 10 vorzugsweise durch Verwendung eines möglichst steifen, wenig federnden Stahlrohres 42 erzielt werden kann. Beides Ausführungsvarianten gemäß Figur 9 und Figur 10 sind durch die gedrängtere Bauweise etwas kompakter als die einfach gewickelte Variante gemäß Figur 5. Anstelle des Rohres mit rundem Querschnitt können als Kühlka-nalrohre auch solche mit anderen Profilen, bspw. mit quadratischem oder rechteckförmigem Profil verwendet werden.

Der Kühlkanal 40 der Figuren 11 und 12 weist eine torusförmige Kontur auf. Die Anschlussstutzen 44 zur Zu- und Abführung des Kühlmediums 18 sind jeweils unterschiedlich ausgestaltet. Bei der Variante gemäß Figur 11 weist der Torusring des Kühlkanals 40 zwischen den nebeneinander angeordneten Anschlussstutzen 44 eine axiale Einschnürung 45 auf, bei welcher der innere Kühlkanal 40 unterbrochen ist, um einen Kurzschluss in der Zirkulation zu vermeiden. Eine entsprechende Einschnürung 45 verlauft bei der Variante gemäß Figur 12 in S-förmiger Richtung zwischen den in axialer Richtung übereinander angeordneten Anschlussstutzen 44, so dass diese ebenfalls voneinander getrennt sind.

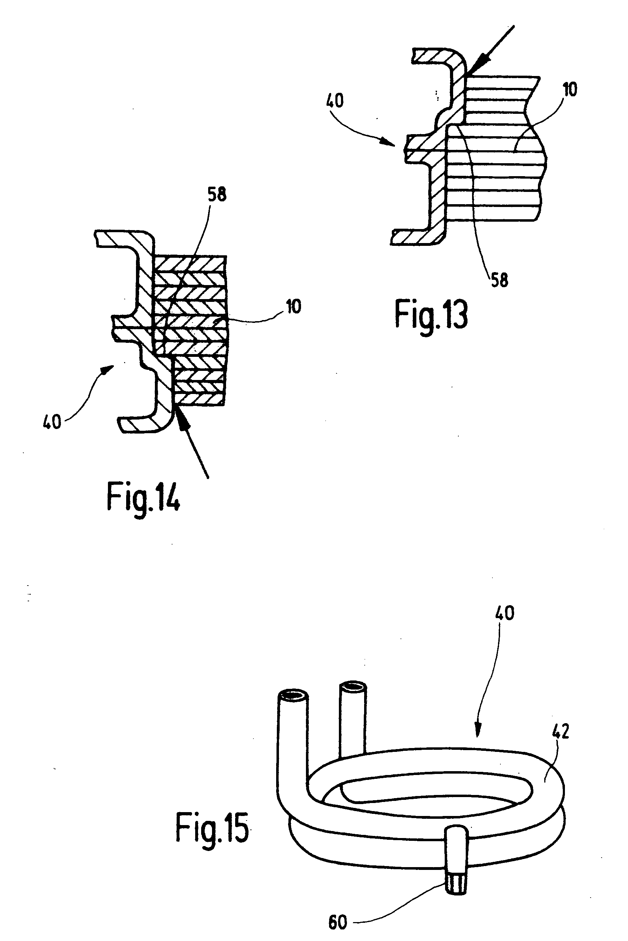

Wie anhand der Figuren 13 und 14 gezeigt ist, kann das Statorpaket 10 an seinem Außenumfang eine oder mehrere Stufen 58 und damit Abschnitt unterschiedlichen Außendurchmessers aufweisen, so dass der Kühlkanal 40 beim Innenhochdruckumformen an diese Stufe 58 angedrückt wird, was ebenfalls die form- und kraftschlüssige Verbindung zwischen Statorpaket 10 und Kühlkanal 40 verbessert.

Figur 15 zeigt eine Ausgestaltung des Kühlkanals 40, bei der außen am Stahlrohr 42 des Kühlkanals 40 ein Befestigungselement 60 vorgesehen ist. Dieses Befestigungselement 60 kann beispielsweise als Gewindebolzen oder als ein flaches Blechstück oder dergleichen ausgebildet sein und dient zur Befestigung des Statorpakets mit dem daran fixierten Kühlkanal 40 in einem Gehäuse der elektrischen Maschine.

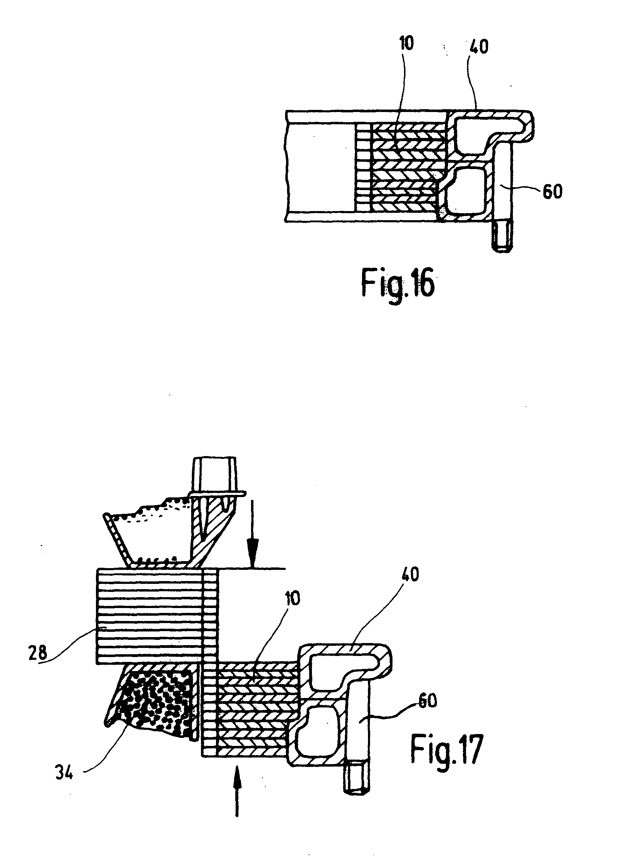

Figur 16 zeigt den am Statorpaket 10 befestigten Kühlkanal 40 mit dem daran angeordneten Befestigungselement 60, der entsprechend Figur 17 mit den Einzelpolen 28 und den darauf aufgebrachten Drahtwicklungen 34 durch gegeneinander Verschieben zusammengefügt wird. Hierzu dienen die Nut-Feder-Verbindungen, die anhand der Figuren 1 bis 4 verdeutlicht sind.

Figur 18 zeigt schließlich einen schematischen Teilschnitt eines im Gehäuse befestigten Stators 10, bei dem der Kühlkanal 40 mittels der Befestigungselemente 60 mit einem Flansch 62 des Gehäuses (nicht dargestellt) verbunden ist.

## Patentansprüche

1. Fluidgekühlte elektrische Maschine mit einem Rotor und einem Stator (10), der zumindest an einem Außenumfang wenigstens einen Kühlkanal (40) für zirkulierendes Kühlfluid aufweist, **dadurch gekennzeichnet, dass** der wenigstens eine Kühlkanal (40) formschlüssig und kraftschlüssig mit einer Außenmantelfläche (54) des Stators (10) bzw. des Statorpakets verbunden ist.

2. Maschine nach Anspruch 1, **dadurch gekennzeichnet, dass** der Stator (10) eine weitgehend zylindrische Außenmantelfläche (54) aufweist.

3. Maschine nach Anspruch 1, **dadurch gekennzeichnet, dass** die Außenmantelfläche (54) des Stators (10) wenigstens eine Stufe (58) und Abschnitte unterschiedlichen Außendurchmessers aufweist.

4. Maschine nach einem der Ansprüche 1 bis 3, **dadurch gekennzeichnet, dass** der Stator (10) als Statorpaket ausgebildet ist, das aus einer Vielzahl von geschichteten und/oder miteinander verbundenen Statorblechen besteht.

5. Maschine nach einem der voranstehenden Ansprüche, **dadurch gekennzeichnet, dass** der wenigstens eine Kühlkanal (40) als ein spiralig gewickeltes Rohr ausgebildet ist.

6. Maschine nach einem der Ansprüche 1 bis 4, **dadurch gekennzeichnet, dass** der wenigstens eine Kühlkanal (40) als ein ringförmig gewickeltes Rohr ausgebildet ist.

7. Maschine nach einem der Ansprüche 1 bis 4, **dadurch gekennzeichnet, dass** der wenigstens eine Kühlkanal (40) eine torusförmige Kontur aufweist.

8. Maschine nach einem der voranstehenden Ansprüche, **dadurch gekennzeichnet, dass** der wenigstens eine Kühlkanal (40) aus Stahlrohr (42) gefertigt ist.

9. Maschine nach einem der voranstehenden Ansprüche, **dadurch gekennzeichnet, dass** der wenigstens eine Kühlkanal (40) wenigstens zwei einstückig mit diesem ausgebildete Anschlussstutzen (44) aufweist.

10. Maschine nach einem der voranstehenden Ansprüche, **dadurch gekennzeichnet, dass** an der Außenmantelfläche (54) des Stators (10) mehrere Axialnuten (56) vorgesehen sind, in die jeweils der Kühlkanal (40) mit seiner Innenfläche form- und/oder kraftschlüssig eingreift.

11. Maschine nach einem der voranstehenden Ansprüche, **dadurch gekennzeichnet, dass** am Kühlkanal (40) Befestigungselemente (60) zur Montage des Stators (10) innerhalb eines Gehäuses der elektrischen Maschine vorgesehen sind.

12. Verfahren zur Herstellung einer fluidgekühlten elektrischen Maschine mit einem Rotor und einem Stator (10), bei dem auf einen Außenumfang eines aus einzelnen, miteinander verbundenen Statorblechen bestehendes Statorpakets ein Kühlkanal (40) für zirkulierendes Kühlfluid montiert wird, **dadurch gekennzeichnet, dass** der wenigstens eine Kühlkanal (40) formschlüssig und kraftschlüssig mit einer Außenmantelfläche (54) des Stators (10) bzw. des Statorpakets verbunden wird.

13. Verfahren nach Anspruch 12, **dadurch gekennzeichnet, dass** der Kühlkanal (40) mittels Innenhochdruckumformung form- und kraftschlüssig mit dem Stator (10) verbunden wird.

14. Verfahren nach Anspruch 13, **dadurch gekennzeichnet, dass** der Stator (10) und der Kühlkanal (40) während der Innenhochdruckumformung jeweils in einem Werkzeug eingespannt sind, welches den Umformraum in allen Richtungen begrenzt.

15. Verfahren nach Anspruch 14, **dadurch gekennzeichnet, dass** in eine Innenmantelfläche des Stators (10) während der Innenhochdruckumformung ein Innenstempel (46) eingefügt wird, welcher eine Durchmesserverringerung des Stators (10) verhindert.

16. Verfahren nach Anspruch 14 oder 15, **dadurch gekennzeichnet, dass** an eine Außenseite des Kühlkanals (40) während der Innenhochdruckumformung eine Matrize (48) angelegt wird, welche eine Dehnung des Kühlkanals (40) nach außen begrenzt.

17. Verfahren nach einem der Ansprüche 14 bis 16, **dadurch gekennzeichnet, dass** an die Stirnseiten des Stators (10) sowie des Kühlkanals (40) während der Innenhochdruckumformung jeweils ein Oberstempel (50) bzw. ein Unterstempel (52) angelegt wird, welche eine Dehnung des Kühlkanals (40) in axialer Richtung begrenzen.
